(19) Europäisches Patentamt
European Patent Office
Office européen des brevets

(11) EP 4 782 928 A1

# (12) EUROPEAN PATENT APPLICATION

(43) Date of publication:
**29.07.2026 Bulletin 2026/31**

(21) Application number: **26153409.3**

(22) Date of filing: **22.01.2026**

(51) International Patent Classification (IPC):
***G03G 15/01*** *(2006.01)* ***G03G 15/16*** *(2006.01)*

(52) Cooperative Patent Classification (CPC):
**G03G 15/162; G03G 15/0189; G03G 15/1685**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **23.01.2025 JP 2025010122**
**27.10.2025 JP 2025180396**

(71) Applicant: **Canon Kabushiki Kaisha**
**Tokyo, 146-8501 (JP)**

(72) Inventors:
- **TSUJI, Yasutomo**
  **Ohta-ku, Tokyo, 146-8501 (JP)**
- **TOYONORI, Masatsugu**
  **Ohta-ku, Tokyo, 146-8501 (JP)**
- **ISHIO, Shohei**
  **Ohta-ku, Tokyo, 146-8501 (JP)**
- **KOJIMA, Hiroomi**
  **Ohta-ku, Tokyo, 146-8501 (JP)**
- **OKAWA, Tomoe**
  **Ohta-ku, Tokyo, 146-8501 (JP)**
- **KADOWAKI, Hiroyuki**
  **Ohta-ku, Tokyo, 146-8501 (JP)**

(74) Representative: **TBK**
**Bavariaring 4-6**
**80336 München (DE)**

## (54) ELECTROPHOTOGRAPHIC MEMBER AND ELECTROPHOTOGRAPHIC IMAGE FORMING APPARATUS

(57) An electrophotographic member composing a base layer and a surface layer on the base layer. The surface layer comprises a binder resin and electronically conductive particles. The binder resin comprises a polymer having an organosiloxane polymer moiety. The organosiloxane polymer moiety has a silsesquioxane structure. An infrared absorption spectrum obtained by measuring the surface of the surface layer using infrared spectroscopy satisfies specific formulas.

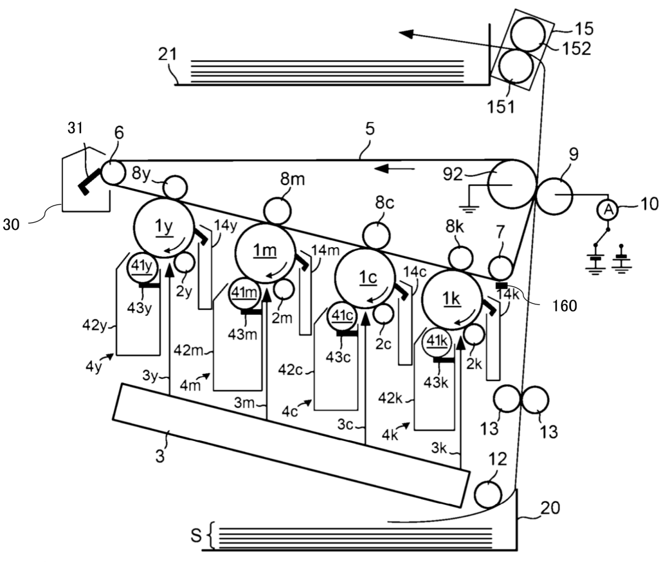


FIG. 1



EP 4 782 928 A1

## Description

TECHNICAL FIELD

The present disclosure relates to an electrophotographic member that can be used as an image bearing member in electrophotographic printers, copiers, etc. using an electrophotographic method, and to an electrophotographic image forming apparatus.

BACKGROUND

In an electrophotographic image forming apparatus (hereinafter also referred to as image forming apparatus) that uses an electrophotographic method, an image is formed on a recording medium such as printing paper by performing a primary transfer step for transferring a toner image formed on a photosensitive member, which is a first image bearing member, to an intermediate transfer belt, which is a second image bearing member, and then performing a secondary transfer step for transferring toner from the intermediate transfer belt to the recording medium.
The secondary transfer step, in which the toner image formed on the intermediate transfer belt, which is the second image bearing member, is transferred to the recording medium, is performed by applying a transfer voltage to the intermediate transfer belt. Setting an appropriate transfer voltage is important to obtain high-quality printed images with minimal image defects.
A configuration is known that changes a transfer current depending on the print percentage and number of pixels in order to obtain uniform prints regardless of the image pattern (Japanese Patent Laid-Open No. 2010-191088).
Japanese Patent Laid-Open No. 2010-191088 discloses an image forming apparatus equipped with a transfer material resistance increasing means for increasing the resistance of the transfer material, and a control means for performing control such that the resistance of the transfer material is increased by the transfer material resistance increasing means before a toner image on the intermediate transfer body is transferred to the transfer material, and the value of the secondary current flowing through a conductive member or an opposing member is increased in accordance with the print percentage and number of pixels of the toner image to be transferred to the transfer material. This configuration suppresses transfer defects in high-print-percentage image patterns by performing control to increase the flow of a transfer current as the print percentage and number of pixels increase, i.e., as the amount of toner transferred to the recording medium increases.
Japanese Patent Laid-Open No. 2007-183401 discloses an intermediate transfer belt including a base layer containing a thermoplastic resin, and a cured resin film that is provided by coating on the base layer, has a specified thickness and contains conductive particles, the intermediate transfer belt satisfying a predetermined relationship. Specifically, the conductive particles are made of antimony-containing zinc oxide, which is a conductive agent of an electronically conductive type.
In addition, a configuration is known in which a speed difference (peripheral speed difference) is provided between the peripheral speed of a photosensitive drum and the peripheral speed of an intermediate transfer belt in order to improve the efficiency of primary transfer of the toner image on the photosensitive member to the intermediate transfer belt.
Providing a speed difference between the peripheral speed of the photosensitive drum and the peripheral speed of the intermediate transfer belt generates a friction force between the two. As a result, the friction force changes depending on whether toner acting as a lubricant is present between the photosensitive drum and the intermediate transfer belt, causing fluctuations in the peripheral speed (rotational speed) of the photosensitive drum. This can cause fluctuations in the exposure of the photosensitive member, resulting in a streak-like image defect known as "exposure blur" at the leading edge of the image.
A technique for suppressing the above-mentioned exposure blur has been proposed, which involves creating a lubricating toner image in non-image areas (Japanese Patent Laid-Open No. 2004-118076).

SUMMARY

However, according to the present inventors' research, where control that increases the transfer current as the amount of toner transferred to the recording medium increases is performed in the configuration disclosed in Japanese Patent Laid-Open No. 2010-191088, "patch voids", a type of image defect described below, are likely to occur in high-temperature and high-humidity environments.
In high-temperature and high-humidity environments, the electrical resistance of transfer roller, intermediate transfer belt, and recording medium tends to decrease. As a result, the difference in electrical resistance between portions with high electrical resistance where toner is present (hereinafter referred to as patch portions) and portions with low electrical resistance where toner is not present (hereinafter referred to as white portions), increases. As a result, the transfer current tends to flow selectively through the white portions. Therefore, for example, to successfully transfer an

image pattern (hereinafter referred to as an isolated patch image) that contains a mixture of patch portions with a high print percentage and white portions within the width of the recording medium (the length of the width approximately perpendicular to the conveyance direction), a large transfer current is required.

However, when transfer current control as in Japanese Patent Laid-Open No. 2010-191088 is implemented, an isolated patch image is determined to have a small amount of toner. Therefore, control to reduce the transfer current is activated. As a result, sufficient transfer current cannot be supplied to the patch portion, potentially resulting in an image defect (patch voids) in which toner is not transferred to the recording medium.

To address the image defects described above, it is necessary to reduce the difference in the surface electrical resistance (hereinafter referred to as surface resistance) of each intermediate transfer member between a room temperature and normal humidity environment and a high-temperature and high-humidity environment, i.e., to reduce environmental fluctuations. To reduce environmental fluctuations, the inventors investigated the use of antimony-containing zinc oxide, which is a conductive agent of an electronic conductivity type disclosed in Japanese Patent Laid-Open No. 2007-183401, in the surface layer.

Two types of conductive agents are generally known for imparting conductivity: ionic conductive agents and electronic conductive agents. Conductive agents of ionic conductivity type exhibit conductivity when ionic compounds flow through the surface layer. For ionic compounds to flow through the surface layer, a conductive path is required for ions to pass through. Polar groups, such as hydroxyl groups, that may be present in the surface layer are thought to function as conductive paths for ionic compounds. Water molecules present in the surface layer are also thought to function as conductive paths. When the surface layer contains a large number of water molecules, such as in a high-humidity environment, the number of conductive paths for ions increases accordingly, making it easier for ions to flow. Therefore, ionic compounds are easily affected by water molecules in the environment. As a result, conductive agents of ionic conductivity type have the property of lowering electrical resistance, especially in high-humidity environments.

Meanwhile, conductive agents of electronic conductivity type exhibit conductivity through the flow of electrons. As a result, they are less affected by moisture and exhibit minimal change in electrical resistance, even in high-humidity environments.

However, the present inventors' research has revealed that even with intermediate transfer belts with surface layers containing conductive agents of electronic conductivity type, the decrease in electrical resistance in high-temperature and high-humidity environments is not sufficiently suppressed. The present inventors believe this is due to the influence of a dispersing agent used to disperse electronically conductive particles, such as antimony-containing zinc oxide and antimony-containing tin oxide, in a coating material used to form the surface layer. When dispersing electronically conductive particles etc. in a coating material, dispersing agents such as acids and bases are typically added. It is believed that these dispersing agents exhibit conductivity under the effect of moisture in the environment, causing environmental fluctuations.

Further research by the present inventors has revealed that, in intermediate transfer belts, which serve as image bearing members, environmental fluctuations tend to gradually increase as the number of prints increases. The reason for this is presumed to be as follows.

Intermediate transfer belts are constantly exposed to minute electrical discharges that occur during the primary and secondary transfer steps. The present inventors' research has revealed that these electrical discharges oxidize the surface of the intermediate transfer belt, gradually making it hydrophilic. This hydrophilicity of the intermediate transfer belt makes it more susceptible to moisture in the environment. In particular, in high-humidity environments, the surface of the electrophotographic member adsorbs large amounts of water molecules, increasing the number of conductive paths for ionic compounds. This is believed to augment environmental fluctuations.

In recent years, there has been a growing demand for higher durability in electrophotographic image forming apparatuses to reduce the replacement frequency of apparatus members. The present inventors recognized that suppressing hydrophilicity caused by electrical discharges during the transfer steps is necessary to suppress environmental fluctuations even after multiple prints.

The present disclosure has been made in consideration of the above-mentioned disadvantages, and provides an electrophotographic member that, when used as an image bearing member such as an intermediate transfer belt, exhibits small decrease in surface resistance in high-temperature and high-humidity environments, even after multiple prints, thereby suppressing image defects. The present disclosure also provides an electrophotographic image forming apparatus as specified in claim 10.

The present disclosure relates to an electrophotographic member as specified in claims 1 to 9.

According to one aspect of the present disclosure, an electrophotographic member is provided that exhibits small decrease in electrical resistance in high-temperature and high-humidity environments, even after multiple prints, thereby suppressing image defects. According to another aspect of the present disclosure, an electrophotographic image forming apparatus is provided that is equipped with the electrophotographic member of the present disclosure as an intermediate transfer member. Features of the present disclosure will become apparent from the following description of embodiments with reference to the attached drawings. The following description of embodiments is described by way of example.

BRIEF DESCRIPTION OF THE DRAWINGS

FIG. 1 is a schematic cross-sectional view of an image forming apparatus according to the present disclosure.
FIG. 2 is a schematic cross-sectional view of an intermediate transfer member according to the present disclosure.
FIG. 3 is an example of an infrared absorption spectrum according to Example 1.
FIG. 4 is a partially enlarged view of the infrared absorption spectrum of FIG. 3.
FIG. 5 is a partially enlarged view of the infrared absorption spectrum of FIG. 3.
FIG. 6 is a partially enlarged view of the infrared absorption spectrum of FIG. 3.
FIG. 7 is a partially enlarged view of the infrared absorption spectrum of FIG. 3.
FIG. 8 is an example of the NMR spectrum of a surface layer.
FIGS. 9A and 9B are examples of the infrared absorption spectrum of acrylic monomers.

DESCRIPTION OF THE EMBODIMENTS

In the present disclosure the notations "from XX to YY" and "XX to YY" representing a numerical value range signify, unless otherwise specified, a numerical value range that includes the lower limit and the upper limit of the range, as endpoints. In a case where numerical value ranges are described in stages, the upper limits and the lower limits of the respective numerical value ranges can be combined arbitrarily. In the present disclosure, for instance, a wording such as "at least one selected from the group consisting of XX, YY and ZZ" encompasses (1) XX, (2) YY, (3) ZZ, (4) a combination of XX and YY, (5) a combination of XX and ZZ, (6) a combination of YY and ZZ, and (7) a combination of XX, YY and ZZ.

Furthermore, in the present disclosure, the unit of surface resistivity (LOGΩ/□) refers to the logarithmic notation of (Ω/square).

In the present disclosure, "(meth)acrylic" means "acrylic" and/or "methacrylic," and "(meth)acryloyl" means "acryloyl" and/or "methacryloyl."

The "unit" in the (meth)acrylic moiety refers to the reacted form of a monomer substance in a polymer. For example, one section of carbon-carbon bonds in the main chain of a polymer formed by polymerization of a vinyl-based monomer is considered to be one unit. A vinyl-based monomer can be represented by the following formula (C):

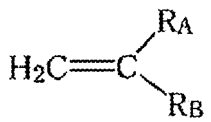

(C)

In formula (C), $R_A$ represents a hydrogen atom or an alkyl group (preferably an alkyl group having 1 to 3 carbon atoms, more preferably a methyl group), and $R_B$ represents an optional substituent.

As described above, the present inventors assumed that the phenomenon of the surface resistance decreasing in a high-temperature and high-humidity environment, that is, the environmental fluctuations becoming large, when the intermediate transfer belt according to Japanese Patent Laid-Open No. 2007-183401 is used for a long period of time is caused by the following influences: the influence of ionic compounds that may be contained in the surface layer, and the influence of hydrophilization of the intermediate transfer belt due to extended use.

The present inventors have accordingly discovered that environmental fluctuations can be suppressed even over extended periods of use when a surface layer contains electronically conductive particles and a binder resin including a polymer having an organosiloxane polymer moiety, and an infrared absorption spectrum obtained by measuring the surface of the surface layer using infrared spectroscopy satisfies a specific formula.

The present inventors believe that the reason why environmental fluctuations can be suppressed is as follows.

Polymers having organosiloxane polymer moieties exhibit an effect of suppressing environmental fluctuations when they contain a certain or larger amount of silanol groups and dimethylsilicone structures in the molecular structure thereof.

Furthermore, an organosiloxane polymer moiety has a silsesquioxane structure. Since the siloxane bonds in the silsesquioxane structure have higher bond energy than the carbon-carbon bonds constituting the resin, and the silsesquioxane structure contains a large number of siloxane bonds, the surface is less susceptible to hydrophilization caused by electrical discharge. As a result, the hydrophilization of the member surface is less likely to progress over extended periods of use, which is thought to have the effect of suppressing environmental fluctuations.

Furthermore, introducing a certain or larger number of silanol groups and dimethylsilicone structures into the surface layer is thought to suppress the formation of conductive paths for ionic compounds in the coating film of the surface layer. The influence of, for example, hydroxyl groups present on the surface of electronically conductive particles as

conductive paths may be considered. The coating film of the surface layer referred to herein is the film of the coating material for forming the surface layer.

It is supposed that when an organosiloxane polymer is blended into the coating film of the surface layer, the silanol groups in the organosiloxane polymer are attracted to the hydroxyl groups on the surface of the electronically conductive particles through electrostatic interaction. Furthermore, a dimethylsilicone structure, which is a hydrophobic group, is present in the organosiloxane polymer structure according to the present disclosure. Therefore, the hydroxyl groups on the surface of the electronically conductive particles are covered with the hydrophobic dimethylsilicone structure. This is thought to suppress the formation of conductive paths for ionic compounds. Since the coating film of the surface layer is cured in this state, the resulting surface layer suppresses the formation of conductive paths for ionic compounds. This is thought to exhibit the effect of suppressing the influence of moisture in the environment.

Based on the above considerations, the present inventors have come up with an electrophotographic member according to the present disclosure.

That is, the present disclosure relates to an electrophotographic member composing a base layer and a surface layer on the base layer, wherein the surface layer comprises a binder resin and electronically conductive particles, the binder resin comprises a polymer having an organosiloxane polymer moiety, the organosiloxane polymer moiety has a silsesquioxane structure, and an infrared absorption spectrum obtained by measuring a surface of the surface layer using infrared spectroscopy satisfies formulas (1) and (2).

$$(1)\quad 0.20 \leq (B/A) \leq 0.60$$

$$(2)\quad 0.50 \leq (C/A) \leq 0.92$$

A represents a maximum value of absorbance in an absorption band corresponding to Si-O-Si bonds observed within a wavenumber range of 1000 to 1025 $cm^{-1}$, B represents a maximum value of absorbance in an absorption band corresponding to Si-OH bonds observed within a wavenumber range of 3200 to 3500 $cm^{-1}$, and C represents a maximum value of absorbance in an absorption band corresponding to $Si\text{-}CH_3$ bonds observed within a wavenumber range of 1225 to 1300 $cm^{-1}$.

Image Bearing Member

The electrophotographic member of the present disclosure can be suitably used as an image bearing member. The application on the image bearing member is not particularly limited. For example, the image bearing member is suitable for use as an intermediate transfer belt that temporarily transfers and holds a toner image, as a conveyor belt that conveys a recording material as a transfer material, and the like.

An intermediate transfer belt as an electrophotographic member according to one aspect of the present disclosure is described in detail below. The present disclosure is not limited to the following aspect.

Intermediate Transfer Belt

As shown in FIG. 2, the intermediate transfer belt has a base layer 2-2 and a surface layer 2-1 on the base layer. The intermediate transfer belt is, for example, a laminate composed of two layers: the base layer 2-2 and the surface layer 2-1. The layers that the intermediate transfer belt can have are not limited to these two layers; a primer layer to improve adhesion, a stress relief layer to suppress cracking in the surface layer, or an intermediate layer to suppress bleeding may be provided between the layers.

Base Layer

The base layer may have an endless shape. While there are no particular limitations on the material used for the base layer, it is preferable that the base layer contain a crystalline polyester. It is also preferable that the base layer contain a conductive agent. Examples of such a base layer include a cylindrically joined semiconductive film obtained by including a conductive agent into a resin containing a crystalline polyester, or a cylindrical seamless belt.

The thickness of the base layer is not particularly limited. Because the base layer is placed in a bent state within the electrophotographic image forming apparatus, to ensure flexibility, the thickness is preferably from 40 μm to 500 μm, and particularly preferably from 50 μm to 100 μm.

## Crystalline Polyester

The crystalline polyester can be obtained by polycondensation of a dicarboxylic acid and a diol, polycondensation of a hydroxycarboxylic acid or a lactone, or polycondensation using a plurality of these components. Additional multifunctional monomers may also be used. Crystalline polyesters may be homopolyesters formed by polymerizing monomers of one type, or copolyesters (copolymers) formed by polymerizing monomers of two or more types.

Suitable examples of crystalline polyesters include at least one selected from the group consisting of polyalkylene terephthalates and polyalkylene naphthalates, which have high crystallinity and demonstrate excellent heat resistance. Copolymers of polyalkylene naphthalates and polyalkylene isophthalates are also suitable.

From the viewpoint of high crystallinity and heat resistance, the number of carbon atoms in the alkylene in polyalkylene terephthalates, polyalkylene naphthalates, and polyalkylene isophthalates is preferably from 2 to 16. More specifically, preferred crystalline polyesters are polyethylene terephthalate (PET), polyethylene naphthalate (PEN), polyethylene isophthalate, and copolymers containing these. Of these, polyethylene naphthalate is particularly preferred. These crystalline polyesters can be used alone or in combination of two or more.

The molecular weight of the crystalline polyester is not particularly limited. For example, in the case of PET, the preferred weight-average molecular weight is from 50,000 to 80,000. Furthermore, in the case of PEN, the preferred weight-average molecular weight is from 20,000 to 80,000.

The content ratio of the crystalline polyester in the base layer is preferably 50.0% by mass or more, more preferably 60.0% by mass or more. The content ratio of the crystalline polyester within the above range reliably enhances the mechanical strength of the base layer.

## Conductive Agent

The base layer preferably contains at least one conductive agent selected from the group consisting of nonionic conductive agents and ionic conductive agents. The inclusion of such a conductive agent allows for adjustment of resistivity. The conductive agent may be a polymeric conductive agent or a low-molecular-weight conductive agent.

Examples of polymeric nonionic conductive agents that can be used include polyetheresteramides, polyethylene oxide-epichlorohydrin, polyetheresters, and the like. For polymeric ionic conductive agents, quaternary ammonium group-containing acrylate polymers can be used as cationic conductive, and polystyrene sulfonic acids can be used as anionic conductive agents.

For example, low molecular weight ionic conductive agents include ionic liquids. Ionic liquids are salts consisting of anions and cations that have a melting point at temperatures of 100°C or less. Specific examples of ionic conductive agents include lithium bis(trifluoromethanesulfonyl)imide and lithium bis(fluorosulfonyl)imide, which are classified as ionic liquids.

Where the base layer contains a conductive agent, the content ratio of the conductive agent based on the mass of the base layer is not particularly limited, but is preferably, for example, from 0.5% by mass to 8.0% by mass.

## Additives

The base layer may contain other components as long as they do not impair the effects of the present disclosure. Examples of other components include fillers, antioxidants, UV absorbers, organic pigments, inorganic pigments, pH adjusters, crosslinking agents, compatibilizers, release agents, coupling agents, lubricants, etc. These additives may be used alone or in combination of two or more. The amount of additive used can be set as appropriate and is not particularly limited.

## Surface Layer

The surface layer contains a binder resin and electronically conductive particles. The binder resin contains a polymer having an organosiloxane polymer moiety. The infrared absorption spectrum obtained by measuring the surface of the surface layer using infrared spectroscopy satisfies following formulas (1) and (2).

$$(1) \quad 0.20 \leq (B/A) \leq 0.60$$

$$(2) \quad 0.50 \leq (C/A) \leq 0.92$$

In the formulas, A represents a maximum value of absorbance in an absorption band corresponding to Si-O-Si bonds observed within a wavenumber range of 1000 $cm^{-1}$ to 1025 $cm^{-1}$, B represents a maximum value of absorbance in

an absorption band corresponding to Si-OH bonds observed within a wavenumber range of 3200 $cm^{-1}$ to 3500 $cm^{-1}$, and C represents a maximum value of absorbance in an absorption band corresponding to Si-$CH_3$ bonds observed within a wavenumber range of 1225 $cm^{-1}$ to 1300 $cm^{-1}$.

Examples of methods for forming the surface layer include the following.

A coating material for forming the surface layer is prepared by mixing monomers of binder resin, electronically conductive particles, a polymerization initiator, and the like in an organic solvent. This coating material is then applied to the base layer using any of various coating methods. After the coating material is applied to the base layer, the coating material is dried as needed, and the monomers of the binder resin are polymerized using a known method to form the surface layer. For example, a method for polymerizing the monomers of the binder resin includes adding a photopolymerization initiator and curing with ultraviolet light. That is, the binder resin may be a polymer of a composition containing an organosiloxane polymer and a photopolymerization initiator. The composition may also further contain a (meth)acrylic monomer, as described below.

For example, known methods such as dip coating, spray coating, flow coating, shower coating, roll coating, spin coating, and ring coating can be used for application.

Known stirring methods can be used to manufacture the coating material for forming the surface layer. The coating material for forming the surface layer may also be obtained by preparing individual materials as dispersions or solutions and then mixing.

For example, a dispersion of electronically conductive particles may be prepared, and a resin liquid may be prepared by mixing monomers of binder resin and a polymerization initiator. The dispersion and the resin liquid may then be mixed to obtain the coating material for forming the surface layer.

From the viewpoints of cracking prevention and bending resistance, the thickness of the surface layer is preferably 0.05 μm to 10 μm, more preferably 0.1 μm to 5 μm, and even more preferably 2 μm to 5 μm.

Binder Resin

The binder resin contains a polymer having an organosiloxane polymer moiety. Organosiloxane Polymer Moiety

The organosiloxane polymer moiety has a silsesquioxane structure. The organosiloxane polymer moiety preferably has a silsesquioxane structure as the main skeleton. As will be described in more detail below, the polymer having the organosiloxane polymer moiety preferably has a (meth)acrylic moiety. To introduce the (meth)acrylic moiety, an organosiloxane polymer with a polymerizable functional group can be used.

The presence of a silsesquioxane structure in the surface layer can be confirmed by solid-state NMR. Specifically, the surface layer of an electrophotographic member is scraped off using a cutter or the like. The scraped surface layer is then placed in a mortar and thoroughly pulverized with a pestle to prepare a sample. Solid-state NMR is then measured for the prepared sample.

The presence or absence of a silsesquioxane structure is confirmed from the resulting $^{29}Si$ NMR spectrum. Specifically, the presence of a silsesquioxane structure is determined when a peak is observed between -45 ppm and -70 ppm corresponding to the silsesquioxane structure in the NMR spectrum (see FIG. 8).

Meanwhile, a peak corresponding to a dimethylsiloxane structure can be observed in the $^{29}Si$ NMR spectrum between -20 ppm and -30 ppm.

The equipment and conditions used for the measurement are described below.

Analytical method: NMR (Nuclear Magnetic Resonance)
Measurement equipment: Avance III 400 (Bruker)
Measurement method: $^{29}Si$ DD/MAS
Revolution speed: 8000 Hz
D1 (relaxation wait time): 160 s
Number of accumulations: 2690

As mentioned above, silanol groups and dimethylsilicone structures act on polar groups such as hydroxyl groups in the coating film of the surface layer, reducing the conductive paths. This effectively suppresses environmental fluctuations caused by very small amounts of ionic compounds. Furthermore, the silsesquioxane structure suppresses hydrophilization of the member cause by electrical discharge. This is believed to suppress the occurrence of image defects even after printing multiple prints.

The organosiloxane polymer moiety preferably has a structure represented by a following formula (A) and a structure represented by a following formula (B).

$$-\!\!\left[ R-Si(OH)_m(O_{1/2})_n \right] \qquad (A)$$

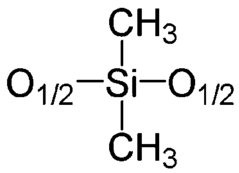 (B)

In formula (A), R represents a single bond or a divalent linking group, m is an integer of 0 to 2, n is an integer of 1 to 3, and m and n satisfy the relationship m + n = 3.

When m = 2 and n = 1 in formula (A), formula (A) represents a T1 unit structure, when m = 1 and n = 2, formula (A) represents a T2 unit structure, and when m = 0 and n = 3, formula (A) represents a T3 unit structure. Furthermore, formula (B) represents a D2 unit structure.

The divalent linking group that R in formula (A) can represent is, for example, a residue remaining after reaction of a polymerizable functional group. Specific examples include residues of polymerizable functional groups such as (meth) acryloyl groups.

Organosiloxane polymers that form the structure represented by formula (A) have radically reactive polymerizable functional groups. For example, (meth)acryloyl groups can be used as such polymerizable functional groups. Organosiloxane polymers with radically reactive polymerizable functional groups can be polymerized with (meth)acrylic monomers (described below) that form (meth)acrylic moieties by using active energy rays such as ultraviolet light. As a result of incorporating the (meth)acrylic moieties formed in this way into the polymer, the polymer has excellent compatibility with organic solvents, can be easily converted into a coating material, and can impart flexibility to the cured coating film.

The abundance of units (T unit structures and D unit structures) in the organosiloxane polymer moiety can be evaluated using infrared absorption spectrum obtained by measuring the surface of the surface layer using infrared spectroscopy. Infrared spectroscopy is an analytical technique for structural analysis and quantification of a sample by irradiating the sample with infrared light and measuring the transmitted or reflected light.

In the present disclosure, it is possible to estimate the relative abundance (unit amount) of functional groups present in the surface layer by reading the absorbance of peaks in the infrared absorption spectrum.

FIGS. 3 to 7 show examples of infrared absorption spectra of the surface of the surface layer of an electrophotographic member according to the present disclosure. In the graphs, wavenumber ($cm^{-1}$) is plotted on the horizontal axis and absorbance is plotted on the vertical axis.

For example, the abundance of units having silanol groups (T1 unit structures, T2 unit structures) can be estimated by reading a maximum value (hereinafter referred to as "B") of absorbance in the absorption band corresponding to silanol groups (Si-OH bonds) observed in the wavenumber range of 3200 $cm^{-1}$ to 3500 $cm^{-1}$ and a maximum value (hereinafter referred to as "A") of absorbance in the absorption band corresponding to siloxane bonds (Si-O-Si bonds) observed in the wavenumber range of 1000 $cm^{-1}$ to 1025 $cm^{-1}$, and calculating the ratio (B/A) between them.

As represented by the above formula (1), the infrared absorption spectrum obtained by measuring the surface of the surface layer using infrared spectroscopy satisfies $0.20 \le B/A \le 0.60$. Where B/A is less than 0.20, the amount of silanol groups present in the coating film will be small. In this case, there will be fewer adsorption points for hydroxyl groups on the surface of the electronically conductive particles. As a result, the suppression of conductive paths for the ionic compound is unlikely to be effective. Furthermore, where B/A is greater than 0.60, the amount of silanol groups present in the coating film will be too high, making the silanol groups more likely to adsorb moisture from the environment and increasing environmental fluctuations.

From the viewpoint of further facilitating the reduction of environmental fluctuations and further improving the durability of the member, the B/A value is preferably 0.20 to 0.50, more preferably 0.23 to 0.48, and even more preferably 0.23 to 0.35.

The abundance of units having dimethylsilicone (structures represented by formula (B)) can be estimated by reading a maximum value (hereinafter referred to as "C") of absorbance in the absorption band corresponding to $Si\text{-}CH_3$ bonds observed in the wavenumber range of 1225 $cm^{-1}$ to 1300 $cm^{-1}$ and a maximum value A of absorbance in the absorption band corresponding to siloxane bonds (Si-O-Si bonds) observed in the wavenumber range of 1000 $cm^{-1}$ to 1025 $cm^{-1}$, and calculating the ratio (C/A) between them.

As represented by formula (2) above, the infrared absorption spectrum obtained by measuring the surface of the surface layer using infrared spectroscopy satisfies the condition $0.50 \le C/A \le 0.92$. Where C/A is less than 0.50, the amount of hydrophobic dimethylsilicone structures is reduced. As a result, the effect of preventing moisture from entering the coating film is reduced. Furthermore, when C/A exceeds 0.92, the amount of dimethylsilicone becomes relatively large, which tends to decrease the hardness of the surface layer. As a result, the surface layer becomes more susceptible to wear over long periods of use.

From the viewpoint of minimizing environmental fluctuations and improving the durability of the member, the C/A

value is preferably 0.50 to 0.85, more preferably 0.51 to 0.81, and even more preferably 0.51 to 0.65.

Furthermore, when the polymerizable functional group is a (meth)acryloyl group, the abundance of T3 unit structures can be estimated by reading a maximum value (hereinafter referred to as "D") of absorbance in the absorption band corresponding to the methylene group (C-C bonds) observed in the wavenumber range of 1425 $cm^{-1}$ to 1500 $cm^{-1}$ and a maximum value A of absorbance in the absorption band corresponding to siloxane bonds (Si-O-Si bonds) observed in the wavenumber range of 1000 $cm^{-1}$ to 1025 $cm^{-1}$, and calculating the ratio (D/A) between them.

The infrared absorption spectrum obtained by measuring the surface of the surface layer using infrared spectroscopy preferably satisfies the following relationship: $0.20 \leq D/A \leq 0.70$. Where D/A is less than 0.20, the amount of siloxane component will be high, which will likely reduce compatibility with organic solvents. This will make it difficult to form a coating material. Furthermore, when the D/A ratio exceeds 0.70, the amount of siloxane component becomes relatively small.

As a result, with each print, oxidative degradation of the resin due to electrical discharge during the transfer step is likely to advance, and the durability of the member decreases.

Organosiloxane polymers can be obtained by a sol-gel reaction of a silane compound such as trialkoxysilane, which has a radical-reactive polymerizable functional group such as a (meth)acryloyl group, with a hydroxyl-modified dialkylpolysiloxane.

As an example, an organosiloxane polymer can be obtained by mixing (3-acryloxypropyl)trimethoxysilane and $\alpha,\omega$-dihydroxypolydimethylsiloxane in a mixed solvent of water and isopropyl alcohol and reacting them at room temperature in the presence of a base catalyst such as an aqueous solution of tetramethylammonium hydroxide.

Polymerizable functional groups other than (meth)acryloyl groups can also be used. Examples of such polymerizable functional groups include epoxy group, oxetanyl group, thiol group, and isocyanate group.

The number-average molecular weight of the organosiloxane polymer is not particularly limited, but may be 1000 to 3000, or 1500 to 2500.

The polymer having an organosiloxane polymer moiety is preferably a polymer having a structure in which an organosiloxane polymer moiety and a (meth)acrylic moiety are bonded. More preferably, the polymer has an acrylic moiety.

To obtain a polymer having a structure in which an organosiloxane polymer moiety and a (meth)acrylic moiety are bonded, an organosiloxane polymer having a polymerizable functional group is used as a raw material, and the polymerizable functional group of the organosiloxane polymer is reacted with a monomer and/or polymer that constitute the (meth)acrylic moiety. Furthermore, a polymer having an organosiloxane polymer moiety may be formed by reacting polymerizable functional groups of the organosiloxane polymer. That is, a polymer having an organosiloxane polymer moiety may be a polymer of an organosiloxane polymer.

The polymerizable functional group is preferably, for example, a (meth)acryloyl group. A (meth)acryloyl group tends to improve compatibility with resin materials, making it easier to blend the organosiloxane polymer moiety into the coating material for forming the surface layer.

The (meth)acrylic monomer that forms the (meth)acrylic moiety preferably includes at least one selected from the group consisting of the following (meth)acrylic monomers.

Examples of (meth)acrylic monomers include pentaerythritol tri(meth)acrylate, pentaerythritol tetra(meth)acrylate, ditrimethylolpropane tetra(meth)acrylate, dipentaerythritol penta(meth)acrylate, dipentaerythritol hexa(meth)acrylate, tripentaerythritol hepta(meth)acrylate, tripentaerythritol octa(meth)acrylate, alkyl(meth)acrylates, benzyl(meth)acrylate, phenyl(meth)acrylate, ethylene glycol di(meth)acrylate, and bisphenol A di(meth)acrylate.

Furthermore, from the viewpoint of increasing the hardness of the surface layer and reducing exposure blur, it is preferable that the (meth)acrylic moiety be composed of at least one polymer selected from the group consisting of dipentaerythritol penta(meth)acrylate, dipentaerythritol hexa(meth)acrylate, tripentaerythritol hepta(meth)acrylate, and tripentaerythritol octa(meth)acrylate. It is more preferable that the (meth)acrylic moiety be composed of at least one polymer selected from the group consisting of pentaerythritol tetraacrylate polymer and dipentaerythritol hexaacrylate, and it is particularly preferable that the (meth)acrylic moiety be composed of a dipentaerythritol hexaacrylate polymer.

From the viewpoint of increasing the hardness of the surface layer and reducing exposure blur, the (meth)acrylic moiety preferably has at least one unit selected from the group consisting of a dipentaerythritol (meth)acrylate unit and a tripentaerythritol (meth)acrylate unit, more preferably has at least one unit selected from the group consisting of a dipentaerythritol acrylate unit and a tripentaerythritol acrylate unit, and even more preferably has a dipentaerythritol acrylate unit.

Examples of the dipentaerythritol (meth)acrylate unit include at least one unit selected from the group consisting of a dipentaerythritol penta(meth)acrylate unit and a dipentaerythritol hexa(meth)acrylate unit.

Examples of the tripentaerythritol (meth)acrylate unit include at least one unit selected from the group consisting of a tripentaerythritol hepta(meth)acrylate unit and a tripentaerythritol octa(meth)acrylate unit.

When the (meth)acrylic moiety has at least one unit selected from the group consisting of a dipentaerythritol (meth)acrylate unit and a tripentaerythritol (meth)acrylate unit, the total content of such units in the (meth)acrylic moiety is

not particularly limited and may be, for example, 40.0% by mass to 100.0% by mass, preferably 60.0% by mass to 100.0% by mass, more preferably 80.0% by mass to 100.0% by mass, and even more preferably 90.0% by mass to 100.0% by mass.

The (meth)acrylic moiety may have a pentaerythritol (meth)acrylate unit. Examples of the pentaerythritol (meth) acrylate unit include a pentaerythritol tri(meth)acrylate unit and a pentaerythritol tetra(meth)acrylate unit.

The content of binder resin in the surface layer is preferably, for example, 10.0% by volume to 95.0% by volume, and more preferably 50.0% by volume to 90.0% by volume.

The content of organosiloxane polymer moiety in the binder resin is not particularly limited, but may be, for example, 0.8% by mass to 55.0% by mass, and preferably 5.0% by mass to 55.0% by mass. The content of (meth)acrylic moiety in the binder resin is not particularly limited, but may be, for example, 45.0% by mass to 99.5% by mass, and preferably 45.0% by mass to 92.0% by mass.

FIGS. 9A and 9B show an infrared absorption spectrum of pentaerythritol tetraacrylate monomer, which is a tetrafunctional acrylic monomer, and an infrared absorption spectrum of dipentaerythritol hexaacrylate monomer, which is a hexafunctional acrylic monomer. In the graphs, wavenumber ($cm^{-1}$) is plotted on the horizontal axis and absorbance is plotted on the vertical axis.

As shown in FIG. 9B, dipentaerythritol hexaacrylate monomer has a peak corresponding to an ether bond (C-O-C bond) near 1113 $cm^{-1}$. The same is true for dipentaerythritol hexamethacrylate monomer, dipentaerythritol penta(meth) acrylate monomer, tripentaerythritol hepta(meth)acrylate monomer, and tripentaerythritol octa(meth)acrylate monomer.

Therefore, the total abundance of dipentaerythritol (meth)acrylate units and tripentaerythritol (meth)acrylate units in the surface layer can be estimated by reading a maximum value (hereinafter referred to as "E") of an absorbance difference from a baseline among the absorbances of an absorption band corresponding to C-O-C bonds observed in a wavenumber range of 1080 $cm^{-1}$ to 1135 $cm^{-1}$, the baseline being a straight line connecting a point at wavenumber 1080 $cm^{-1}$ and a point at wavenumber 1135 $cm^{-1}$ on the infrared absorption spectrum, and a maximum value (hereinafter referred to as "A") of absorbance in an absorption band corresponding to Si-O-Si bonds observed within a wavenumber range of 1000 $cm^{-1}$ to 1025 $cm^{-1}$, and calculating the ratio (E/A) between them.

The infrared absorption spectrum obtained by measuring the surface of the surface layer using infrared spectroscopy preferably satisfies the following formula (3).

$$0.06 \leq (E/A) \quad (3)$$

An E/A ratio of 0.06 or more increases the crosslink density in the binder resin, thereby reducing exposure blur. This is particularly true even when printing multiple sheets. The E/A value is preferably 0.10 or more, and even more preferably 0.13 or more. There is no upper limit to the E/A value, and it may be 0.06 to 0.20, 0.10 to 0.20, or 0.13 to 0.20.

Furthermore, in the technique for forming a lubricating toner image to suppress exposure blur, such as that disclosed Japanese Patent Laid-Open No. 2004-118076, the lubricating toner image is formed at a predetermined print percentage across the entire width of the image region in the main scanning direction. The present inventors recognized that this results in a high consumption of toner for forming the lubricating toner image.

The present inventors have discovered that in order to reduce exposure blur without forming a lubricating toner image, it is important that the coefficient of friction when the toner that functions as a lubricant is present between the photosensitive drum and the intermediate transfer belt be close to that when the toner is not present therein. In other words, the present inventors recognized that it is important to reduce the coefficient of friction between the photosensitive drum and the intermediate transfer belt when toner is not present.

Furthermore, the present inventors have confirmed that exposure blur tends to become more pronounced as the content of organosiloxane polymer in the coating film of the surface layer increases. In a surface layer obtained by curing a coating film with a high content of organosiloxane polymer, the content of organosiloxane polymer moiety in the polymer increases. This is supposedly due to a decrease in the hardness of the surface layer and an increase in the frictional force of the intermediate transfer belt against the photosensitive drum.

After further investigation, the present inventors have discovered that exposure blur can be reduced by increasing the surface layer hardness, even in intermediate transfer belts with a high content of organosiloxane polymer.

From the above viewpoint, the hardness of the surface layer of the electrophotographic member is preferably 0.25 GPa or more. Having this hardness within this range reduces the frictional force of the intermediate transfer belt against the photosensitive drum, thereby reducing exposure blur. The hardness is more preferably 0.26 GPa or more, and even more preferably 0.28 GPa or more. There is no particular upper limit to the hardness, and it may be 0.25 GPa to 0.40 GPa, 0.26 GPa to 0.40 GPa, or 0.28 GPa to 0.40 GPa.

A method for measuring the hardness of the surface layer is described below. The hardness of the surface layer obtained by the method described below is nanoindentation hardness.

The hardness of the surface layer can be adjusted by changing the amount of polymerization initiator, the amount

of (meth)acrylic monomer that forms the (meth)acrylic moiety, or the type of (meth)acrylic monomer that forms the (meth) acrylic moiety.

Electronically Conductive Particles

The surface layer contains electronically conductive particles. While there are no particular limitations on the electronically conductive particles, antimony-containing zinc oxide and antimony-containing tin oxide can suitably be used. In other words, the electronically conductive particles preferably contain at least one selected from the group consisting of antimony-containing tin oxide particles and antimony-containing zinc oxide particles. Commercially available electronically conductive particles include transparent conductive particles SN-100P and FS-100 manufactured by Ishihara Sangyo Kaisha, Ltd., and T-1 manufactured by Mitsubishi Materials Electronic Chemicals Co., Ltd.
A slurry in which electronically conductive particles are dispersed in a solvent is prepared in advance. By blending this conductive slurry into the coating material for the surface layer, the conductive particles can be easily dispersed in the coating film.
The solvent can be an organic solvent such as methyl ethyl ketone, methyl alcohol, or isopropyl alcohol. A dispersing agent can also be used to disperse the electronically conductive particles in the dispersion medium.
The dispersing agent may be any dispersing agent capable of dispersing the particles. Examples include diisopropylamine, trioctylamine, malic acid, acetic acid, and polymeric phosphoric acid. Known dispersing agents can be used. These dispersing agents are not particularly limited as long as they are capable of dispersing the electronically conductive particles. A single type may be used, or multiple types may be mixed.
The amount of dispersing agent is not particularly limited, but the total amount of dispersing agent per 100 parts by mass of electronically conductive particles in the coating material for forming the surface layer is preferably 2.0 parts by mass or less, and more preferably 1.5 parts by mass or less. There is no particular lower limit, and the total amount of dispersing agent per 100 parts by mass of electronically conductive particles may be 0.1 parts by mass to 2.0 parts by mass, or 0.1 parts by mass to 1.5 parts by mass.
The content of electronically conductive particles in the surface layer is not particularly limited, but is preferably 1.0% by mass to 10.0% by mass, and more preferably 2.0% by mass to 8.0% by mass.
That the binder resin has an organosiloxane polymer moiety and a (meth)acrylic moiety can be confirmed by using an infrared absorption spectrum obtained by measuring the surface of the surface layer using infrared spectroscopy, as described above.

Additives

The coating material for forming the surface layer may contain, as needed, other additives, such as known photopolymerization initiators, leveling agents, solvents, and the like. These additives may be used singly or in combination of two or more. The amount of additives used can be set as appropriate and is not particularly limited.

Electrophotographic Image Forming Apparatus

FIG. 1 shows an example of an image forming apparatus configured as an electrophotographic apparatus, which includes an electrophotographic member according to at least one aspect of the present disclosure as an intermediate transfer member (intermediate transfer belt). That is, FIG. 1 is a schematic cross-sectional view showing an example of an electrophotographic image forming apparatus.
This image forming apparatus forms color images on a recording medium S, such as paper supplied from a paper feed cassette 20, using four colors of toner: cyan (C), magenta (M), yellow (Y), and black (K). Image forming stations for each color are arranged side by side in an approximately horizontal direction.
These image forming stations are equipped with photosensitive drums 1c, 1m, 1y, and 1k, respectively. Here, the suffix "c," "m," "y," or "k" is added to the reference numeral to indicate the color of the image forming station to which the member belongs. The electrophotographic image forming apparatus is equipped with a laser scanner 3, a laser optical unit, which emits laser light 3c, 3m, 3y, and 3k corresponding to the image signals for each color toward the respective photosensitive drums 1c, 1m, 1y, and 1k. Since all image forming stations have the same structure, only the K-color image forming station will be described here.
A conductive roller 2k, which is a contact charging device, a developing device 4k, a conductive roller 8k, which is a primary transfer roller, and a toner recovery blade 14k, which is used to clean the photosensitive drum 1k, are disposed so as to surround the photosensitive drum 1k. The developing device 4k includes a developing roller 41k, which is a developer carrying member that develops the latent image on the photosensitive drum 1k, a developer container 42k that holds toner to be supplied to the developing roller 41k, and a developing blade 43k that regulates the amount of toner on the developing roller 41k and applies a charge.

An electrophotographic belt 5 is configured as an endless belt. In other words, the electrophotographic member may be an intermediate transfer belt having an endless belt shape. The electrophotographic belt 5 is provided in common to image forming station of each color. The electrophotographic belt is stretched over a secondary transfer counter roller 92, a tension roller 6, and a drive roller 7, and rotated by the drive roller 7 in the direction of the depicted arrow. Between the tension roller 6 and the drive roller 7, the electrophotographic belt 5 contacts the surfaces of photosensitive drums 1c, 1m, 1y, and 1k in sequence and is pressed toward photosensitive drums 1c, 1m, 1y, and 1k by primary transfer rollers 8c, 8m, 8y, and 8k, respectively. This causes the toner images formed on the surfaces of photosensitive drums 1c, 1m, 1y, and 1k to be transferred to the surface of the electrophotographic belt 5, which serves as an intermediate transfer member. The density of the toner image transferred onto the intermediate transfer belt is detected by an image density sensor 160, and the adjustment of, e.g., image misalignment is performed based on the detection results.

A secondary transfer roller 9 is located opposite the secondary transfer counter roller 92, and the electrophotographic belt 5 is pressed toward the secondary transfer counter roller 92 by the secondary transfer roller 9. A secondary transfer voltage is applied to the secondary transfer roller 9 from a power source through a current detection circuit 10. The secondary transfer roller 9 and the secondary transfer counter roller 92 form a secondary transfer unit. The recording medium S is passed by a feed roller 12 and a transport roller 13 through a nip between the electrophotographic belt 5 and the secondary transfer roller 9 at the position of the secondary transfer counter roller 92. As a result, the toner image held on the outer peripheral surface of the electrophotographic belt 5 is transferred. This forms an image on the surface of the recording medium S.

The recording medium S with the transferred toner image passes through a fixing device 15, which consists of a pair of rollers, namely, a heating roller 151 and a pressure roller 152. As a result, the image is fixed, and the recording medium S is discharged to an output tray 21. A cleaning blade 31 is provided at the position of the tension roller 6 and abuts on the outer peripheral surface of the electrophotographic belt 5. Toner that was not transferred to the recording medium S and remains on the outer peripheral surface of the electrophotographic belt 5 is removed from the electrophotographic belt 5 and collected by a belt cleaning device 30.

## EXAMPLES

The present disclosure is described hereinbelow in more detail using examples. The aspects of the present disclosure are not limited to the following examples.

First, methods for evaluating the physical properties of an intermediate transfer belt will be described.

### Surface Resistance Measurement Method

The surface resistance of the intermediate transfer belt was measured in accordance with Japanese Industrial Standard (JIS) K 6911 using a resistivity meter (product name: Hiresta UP MCP-HT450, manufactured by Mitsubishi Chemical Analytech Co., Ltd.). A UR100 probe was placed in contact with the surface of the surface layer of the intermediate transfer belt. The measurement result obtained at an applied voltage of 100 V and a measurement time of 10 sec was taken as the surface resistance. The unit is (LOG Ω/□).

### Surface Resistance Measurement Environment

The surface resistance of the intermediate transfer belt was measured in a room temperature and normal humidity environment according to the following procedure. The intermediate transfer belt was allowed to stand in an environmental test chamber controlled at a temperature of 23°C and a relative humidity of 50% for 24 h. The surface resistance of the intermediate transfer belt was then measured under the same environment using the method described above.

The surface resistance of the intermediate transfer belt was also measured in a high-temperature and high-humidity environment according to the following procedure.

The intermediate transfer belt was allowed to stand in an environmental test chamber controlled at a temperature of 30°C and a relative humidity of 80% for 24 h. The surface resistance of the intermediate transfer belt was then measured under the same environment using the method described above.

### Evaluation of Environmental Fluctuations in Surface Resistance

The surface resistance was measured using the method described above under a room temperature and normal humidity environment (temperature 23°C, relative humidity 50%) and a high-temperature and high-humidity environment (temperature 30°C, relative humidity 80%), and the environmental fluctuations in the surface resistance of the intermediate transfer belt were defined as a difference between the resistance measured under the high-temperature and high-humidity environment and the resistance measured under the room temperature and normal humidity environment. The unit is (LOG Ω/□).

IR Measurement

Infrared spectroscopy of the surface layer of the intermediate transfer belt was performed using Spotlight 400 Universal ATR (manufactured by PerkinElmer Co.). The measurement conditions were as follows:

Detector: MIR-TGS
Measurement range: 600-4000 $cm^{-1}$
Resolution: 2 $cm^{-1}$
Number of accumulations: 8
ATR crystal: Diamond/ZnSe
Background: Air
Horizontal axis unit: Wavenumber
Vertical axis unit: %A (Absorbance)
B/A, C/A, D/A, and E/A were calculated using the method described above.
Image Evaluation (Patch Voids)

Image evaluation was performed using an electrophotographic laser printer (product name: LBP7700C, manufactured by Canon Inc.). The prepared intermediate transfer belt was mounted and allowed to stand in an environmental testing chamber controlled at 30°C and 80% relative humidity for 24 h. A low-print image (print percentage 5%) was printed on letter-size XEROX 4200 paper (manufactured by XEROX CORPORATION, 75 $g/m^2$), and the level of patch voids was visually inspected.
The level of patch voids was evaluated as follows.

Rank A: Almost no patch voids are observed.
Rank B: Minor patch voids are observed in some places.
Rank C: Numerous patch voids are observed.
Evaluation of Surface Layer Hardness

The hardness of the surface layer of the intermediate transfer belt was measured using a NanoIndenter G-200 (manufactured by Agilent Technologies, Inc.). The measurement conditions were as follows:

Measurement head: DCM head
Indenter: Berkovich type
Indentation depth: 500 nm
Evaluation range: 100 nm from the outermost surface
Measurement temperature: 23°C
Number of measurements: Measurements were taken at 16 equally spaced locations within the sample to avoid arbitrary measurement, and the average value was used as the value of surface layer hardness.

Image Evaluation (Exposure Blur)

Evaluation was performed using the same electrophotographic laser printer as used for image evaluation (patch voids). The samples were allowed to stand for 24 h in an environmental test chamber controlled at a temperature of 23°C and a relative humidity of 50%. A halftone (print percentage 50%) image pattern was printed on letter-size XEROX 4200 paper (manufactured by XEROX CORPORATION, 75 $g/m^2$), and the level of exposure blur (horizontal streaks) was checked visually and with a magnifying glass.
The level of exposure blur was evaluated as follows.

Rank A: No horizontal streaks are observed with a magnifying glass.
Rank B: No horizontal streaks are observed visually, but slight horizontal streaks are observed with a magnifying glass.
Rank C: Minor horizontal streaks are observed visually.
Rank D: Horizontal streaks are observed visually.

Durability Evaluation

To evaluate the durability of the intermediate transfer belt, one million images were printed with an image pattern at a print percentage of 4% (1% printing for each color of cyan, magenta, yellow, and black) under a room temperature and normal humidity environment by using the same printer and printing paper as used in the image evaluation above.

Then, the environmental fluctuations in the surface resistance of the intermediate transfer belt after printing were evaluated, by the above-described method. The image and exposure blur were also evaluated using the intermediate transfer belt after printing by each of the methods described above.

Example 1

The following raw materials were used to form the base layer.

- Polyethylene naphthalate (product name: Teonex TN8050SC, manufactured by Teijin Limited) (hereinafter referred to as "PE(1)") as the polyester resin.
- Polyether ester amide (product name: TPAE-10HP-10, manufactured by T&K Toka Corporation) (hereinafter referred to as "PEEA") as the conductive agent.

  - Potassium perfluorobutanesulfonate (product name: Eftop KFBS, manufactured by Mitsubishi Materials Electronic Chemicals Co., Ltd.) (hereinafter referred to as "KFBS").

The above PE(1), PEEA, and KFBS were mixed in ratios of PE(1)/PEEA/KFBS = 80/18/2 (% by mass). The mixture was then melt-mixed at 290°C for 5 min using a twin-screw extruder (product name: TEX30$\alpha$, manufactured by The Japan Steel Works, Ltd.) to obtain a resin mixture consisting of PE(1), PEEA, and KFBS. The resulting resin mixture was pelletized using a cutter (product name: Fan Cutter, manufactured by Hoshi Plastics Co., Ltd.) to obtain resin mixture pellets (pellet size: major axis 3 mm $\times$ minor axis 2 mm). The resulting pellets were dried at 140°C for 6 h.

Next, the dried pellets of the resin mixture were placed in a hopper of an injection molding machine (product name: SE180D, manufactured by Sumitomo Heavy Industries, Ltd.). The cylinder temperature was set to 290°C, and the mixture was melted under screw agitation and injection-molded into a mold to produce a test tube-shaped preform. The resulting preform was placed in a blow molding machine and blow-molded using a stretch rod and air force in a blow mold maintained at a mold temperature of 110°C at a preform temperature of 155°C, an air pressure of 0.3 MPa, and a stretch rod speed of 1000 mm/s to obtain a blown bottle. Both ends of this blown bottle were cut to obtain an endless belt-shaped base layer having a length of 712 mm in the circumferential direction and a length (width) of 244 mm in the direction perpendicular to the circumferential direction. The thickness of the base layer was 70 $\mu$m.

Preparation of Electronically Conductive Particle Dispersion

12.00 g of antimony-containing tin oxide particles (product name: SN-100P, manufactured by Ishihara Sangyo Kaisha, Ltd.), 0.12 g of acetic acid as an organic acid (manufactured by Kishida Chemical Co., Ltd.), 0.03 g of trioctylamine as an amine compound (manufactured by Kishida Chemical Co., Ltd.), and 48.00 g of isopropyl alcohol as a solvent (manufactured by Kishida Chemical Co., Ltd.) were weighed and placed in a 250 mL zirconia container. Additionally, 108.30 g of zirconia beads having a diameter of 0.5 mm were added to the container. The components were then stirred at 400 rpm for 3 h using a planetary ball mill (model: P-6, manufactured by Fritsch Japan Co., Ltd.). The beads were then removed by mesh filtration to obtain a conductive agent dispersion (hereinafter referred to as "ATO slurry") with a solids concentration of ATO particles (i.e., the content ratio of ATO particles in the dispersion) of 20% by mass.

Preparation of Organosiloxane Polymer

46.86 g of (3-acryloxypropyl)trimethoxysilane (product name: KBM-5103, manufactured by Shin-Etsu Chemical Co., Ltd.), 13.68 g of hydroxy-modified polydimethylsiloxane (product name: X-21-5841, manufactured by Shin-Etsu Chemical Co., Ltd.), 10.00 g of water, and 60.00 g of 2-propanol (manufactured by Kishida Chemical Co., Ltd.) were weighed and placed in a reaction vessel.

While stirring the contents of the reaction vessel at room temperature, 3.64 g of an aqueous solution of hydroxylated tetramethylammonium (catalyst; manufactured by Kishida Chemical Co., Ltd.) was gradually added. After stirring at room temperature for 24 h, 100 mL of toluene (manufactured by Kishida Chemical Co., Ltd.) was added to the system. The reaction solution was then washed with saturated brine using a separatory funnel. The organic layer was then separated and dehydrated with anhydrous sodium sulfate. The toluene and other solvent components were then removed under reduced pressure using a rotary evaporator, yielding a silsesquioxane (hereinafter referred to as "SQ1") having

acryloyl groups, dimethylsilicone structures, and silanol groups. The number-average molecular weight of SQ1 was approximately 2200.

The molecular weight was measured using GPC. The measurement conditions are detailed below.

A sample was prepared by dissolving 3 mg of sample in 3 mL of chloroform and filtering through a PTFE filter with a pore size of 0.45 μm. Measurements were performed under the following analytical conditions.

Apparatus: 1200LC (Agilent Technologies, Inc.)
Column: LF-G (f4.6 mm × 10 mm, Shodex) + LF-404 (f4.6 mm × 250 mm, Shodex)
Detector: RID (RID optical system temperature: 35°C)

Preparation of Coating Material for Forming Surface Layer

41.4 g of pentaerythritol tetraacrylate (product name: Aronix M-305, manufactured by Toagosei Co., Ltd.) (hereinafter referred to as "Acrylic (1)"), 0.4 g of SQ1, 3.1 g of photopolymerization initiator (product name: Omnirad 907, manufactured by IGM Resins), and 129.6 g of methyl ethyl ketone (manufactured by Kishida Chemical Co., Ltd.) were mixed and stirred for 30 min to obtain a resin liquid.

Next, 26.0 g of ATO slurry was weighed. While stirring the ATO slurry liquid with a stirrer, 174.5 g of the resin liquid was gradually added. After the resin liquid was added, stirring was continued for 30 min to obtain coating material 1 for forming a surface layer. The concentration of SQ1 in the coating material 1 for forming a surface layer was 0.20% by mass and the concentration of ATO particles was 2.59% by mass.

Formation of Surface Layer

The base layer obtained by blow molding was fitted onto the outer periphery of a cylindrical mold, the ends were sealed, and the base layer together with the mold was immersed in a container filled with the prepared coating material 1 for forming a surface layer. A coating film of the coating material 1 for forming a surface layer was then formed by lifting the base layer so that the relative speed between the liquid surface of the coating material 1 for forming a surface layer and the base layer was constant. The lifting speed (the relative speed between the liquid surface of the curable composition and the base layer) and the solvent ratio of the coating material for forming a surface layer can be adjusted according on the desired film thickness.

In this example, the lifting speed was set to 10 mm/sec to 50 mm/sec, and the thickness of the surface layer was adjusted to 3 μm. After the coating film was formed, it was dried for 1 min in an environment at 23°C while releasing air. The drying temperature and drying time were adjusted, as appropriate, depending on the solvent type, solvent ratio, and coating thickness. The coating film was then irradiated with ultraviolet light using a UV irradiator (product name: UE06/81-3, manufactured by Eye Graphics Co., Ltd.) until the cumulative light intensity reached 600 mJ/$cm^2$. The coating film was cured through reactions between acrylic (1) molecules, between acrylic (1) and the acryloyl groups in SQ1, and between the acryloyl groups in SQ1, thereby forming a surface layer. In this way, an endless transfer belt 1 was obtained.

The IR spectrum of the surface of this transfer belt 1 was measured, revealing a B/A ratio of 0.56, a C/A ratio of 0.91, and a D/A ratio of 0.60. The evaluation results are shown in Table 2.

Examples 2-4

Transfer belts 2 to 4 were prepared and evaluated in the same manner as in Example 1, except that the types and blended amounts of materials were changed as shown in Table 1 below. The evaluation results are shown in Table 2.

Example 5

A transfer belt 5 was prepared in the same manner as in Example 2, except that the ATO slurry was replaced with an antimony-containing zinc oxide slurry (Celnax CX-Z210IP (product name) manufactured by Nissan Chemical Industries, Ltd.). The evaluation results are shown in Table 2.

Comparative Example 1

A transfer belt 6 was prepared in the same manner as in Example 1, except that SQ1 was not used and the blended amounts of materials were changed as shown in Table 1 below. The evaluation results are shown in Table 2.

Comparative Example 2

A transfer belt 7 was prepared in the same manner as in Example 2, except that SQ2 was used instead of SQ1. Specifically, SQ2 was AC-SQ TA100 (product name, manufactured by Toagosei Co., Ltd.). SQ2 is an organopolysiloxane that does not contain dimethylsilicone groups. The evaluation results are shown in Table 2.

Comparative Example 3

A transfer belt 8 was obtained in the same manner as in Example 2, except that an acrylic-modified silicone (X-22-2445 (product name) manufactured by Shin-Etsu Silicone Co., Ltd.) was used instead of SQ1. The acrylic-modified silicone has an acryloyl group at the end of the dimethylsilicone structure. In other words, the acrylic-modified silicone does not contain a silsesquioxane structure or silanol groups. The evaluation results are shown in Table 2.

[Table 1]

| | Transfer belt | Coating material composition | | | | | | | | | |
|---|---|---|---|---|---|---|---|---|---|---|---|
| | | Binder | | | | Conductive agent | | Initiator | | Solvent | |
| | | (Meth)acrylic moiety | | Organosiloxane polymer moiety | | | | | | | |
| | | Type | Blended amount [g] | Type | Blended amount [g] | Type | Blended amount [g] | Type | Blended amount [g] | Type | Blended amount [g] |
| Example 1 | 1 | Acrylic (1) | 41.4 | SQ1 | 0.4 | ATO slurry | 26.0 | Initiator | 3.1 | MEK | 129.6 |
| Example 2 | 2 | Acrylic (1) | 37.9 | SQ1 | 3.8 | ATO slurry | 26.0 | Initiator | 3.1 | MEK | 129.2 |
| Example 3 | 3 | Acrylic (1) | 20.8 | SQ1 | 20.8 | ATO slurry | 26.0 | Initiator | 3.1 | MEK | 129.2 |
| Example 4 | 4 | - | - | SQ1 | 41.7 | ATO slurry | 26.0 | Initiator | 3.1 | MEK | 129.2 |
| Example 5 | 5 | Acrylic (1) | 37.9 | SQ1 | 3.8 | AZO slurry | 26.0 | Initiator | 3.1 | MEK | 129.2 |
| C.E. 1 | 6 | Acrylic (1) | 41.8 | - | - | ATO slurry | 26.0 | Initiator | 3.1 | MEK | 129.7 |
| C.E. 2 | 7 | Acrylic (1) | 37.9 | SQ2 | 3.8 | ATO slurry | 26.0 | Initiator | 3.1 | MEK | 129.2 |
| C.E. 3 | 8 | Acrylic (1) | 37.9 | Acrylic-modified silicone | 3.8 | ATO slurry | 26.0 | Initiator | 3.1 | MEK | 129.2 |

In the table, C.E. represents Comparative Example.

[Table 2]

| | | IR peak ratio | | | Environmental fluctuations | | Patch void evaluation results | |
|---|---|---|---|---|---|---|---|---|
| | | B/A | C/A | D/A | Initial | After durability | Initial | After durability |
| Example 1 | Transfer belt 1 | 0.56 | 0.91 | 0.60 | 0.89 | 0.98 | A | B |
| Example 2 | Transfer belt 2 | 0.48 | 0.79 | 0.55 | 0.85 | 0.81 | A | A |
| Example 3 | Transfer belt 3 | 0.31 | 0.62 | 0.34 | 0.76 | 0.81 | A | A |
| Example 4 | Transfer belt 4 | 0.23 | 0.51 | 0.22 | 0.69 | 0.72 | A | A |
| Example 5 | Transfer belt 5 | 0.49 | 0.81 | 0.54 | 0.83 | 0.89 | A | A |
| C.E.1 | Transfer belt 6 | - | - | 0.69 | 1.05 | 1.51 | C | C |
| C.E. 2 | Transfer belt 7 | 0.30 | - | - | 1.01 | 1.08 | C | C |
| C.E. 3 | Transfer belt 8 | - | - | - | 0.94 | 1.49 | B | C |

In the table, "After durability" indicates the evaluation results obtained using an intermediate transfer belt after printing 1 million prints with an image pattern having a print percentage of 4% under a room temperature and normal humidity environment. The units of values for environmental fluctuations are LOGΩ/□.

Evaluation Results

The evaluation results for the Examples and Comparative Examples are described below.

In all of Examples 1 to 5, environmental fluctuations in surface resistance were small before and after durability, and the results of image evaluation (patch voids) were also good.

In the transfer belt 6 of Comparative Example 1, in which the binder resin was not a polymer of a composition containing an organosiloxane polymer, initial environmental fluctuations were significant, and the environmental fluctuations became even more pronounced after durability. The image evaluation (patch voids) also achieved a C rank both initially and after durability.

These results suggest that using a binder resin that is a polymer of a composition containing an organosiloxane polymer is effective in suppressing environmental fluctuations.

In the transfer belt 7 of Comparative Example 2, the binder resin contained in the surface layer did not have dimethylsilicone structures and did not satisfy formula (2) above. As a result, initial environmental fluctuations degraded. The image evaluation (patch voids) also achieved a C rank both initially and after durability.

In the transfer belt 8 of Comparative Example 3, the binder resin contained in the surface layer does not have a silsesquioxane structure or silanol groups and does not satisfy formula (1) above. The binder resin has dimethylsilicone structures, but does not have silanol groups. As a result, the initial environmental fluctuations degraded as compared to Examples 1 to 5. Furthermore, because the binder resin did not have a silsesquioxane structure, environmental fluctuations were even greater after durability.

Example 6

The transfer belt 3 prepared in Example 3 was used to evaluate the surface layer hardness and image quality (exposure blur). The results are shown in Table 4.

Example 7

A transfer belt 9 was prepared in the same manner as in Example 3, except that the blended amount of initiator was changed to 6.2 g as shown in Table 3 below. The same evaluations as in Example 6 were also performed. The evaluation results are shown in Table 4.

Example 8

A transfer belt 10 was prepared in the same manner as in Example 7, as shown in Table 3 below, except that 10.4 g of Acrylic (1) and 10.4 g of dipentaerythritol hexaacrylate (product name: Aronix M-402, manufactured by Toagosei Co.,

Ltd.) (hereinafter referred to as "Acrylic (2)") were used as the monomers forming the acrylic moiety. Evaluations were also conducted in the same manner as in Example 6. The evaluation results are shown in Table 4.

Example 9

A transfer belt 11 was prepared in the same manner as in Example 7, except that 20.8 g of Acrylic (2) was used as the monomer forming the acrylic moiety. Evaluations were also conducted in the same manner as in Example 6. The evaluation results are shown in Table 4.

Example 10

A transfer belt 12 was prepared in the same manner as in Example 7, except that 20.8 g of tripentaerythritol acrylate (product name: Viscoat #802, manufactured by Osaka Organic Chemical Industry Co., Ltd.) (hereinafter referred to as "Acrylic (3)") was used as the monomer forming the acrylic moiety. Evaluations were also conducted in the same manner as in Example 6. The evaluation results are shown in Table 4.

Example 11

A transfer belt 13 was prepared in the same manner as in Example 7, except that the blended amounts of materials were changed as shown in Table 3 below. The evaluation results are shown in Table 4.

[Table 3]

| | Transfer belt | Coating material composition | | | | | | | | | |
|---|---|---|---|---|---|---|---|---|---|---|---|
| | | Binder | | | | Conductive agent | | Initiator | | Solvent | |
| | | (Meth)acrylic moiety | | Organosiloxane polymer moiety | | | | | | | |
| | | Type | Blended amount | Type | Blended amount | Type | Blended amount | Type | Blended amount | Type | Blended amount |
| | | | [g] | | [g] | | [g] | | [g] | | [g] |
| Example 6 | 3 | Acrylic (1) | 20.8 | SQ1 | 20.8 | ATO slurry | 26 | Initiator | 3.1 | MEK | 129.2 |
| Example 7 | 9 | Acrylic (1) | 20.8 | SQ1 | 20.8 | ATO slurry | 26 | Initiator | 6.2 | MEK | 129.2 |
| Example 8 | 10 | Acrylic (1) Acrylic (2) | 10.4 10.4 | SQ1 | 20.8 | ATO slurry | 26 | Initiator | 6.2 | MEK | 129.2 |
| Example 9 | 11 | Acrylic (2) | 20.8 | SQ1 | 20.8 | ATO slurry | 26 | Initiator | 6.2 | MEK | 129.2 |
| Example 10 | 12 | Acrylic (3) | 20.8 | SQ1 | 20.8 | ATO slurry | 26 | Initiator | 6.2 | MEK | 129.2 |
| Example 11 | 13 | Acrylic (1) | 28.8 | SQ1 | 12.4 | ATO slurry | 26 | Initiator | 6.2 | MEK | 129.2 |

[Table 4]

| | | IR peak ratio | | | | Environmental fluctuations | | Patch void evaluation results | | Surface layer hardness | Exposure blur evaluation results | |
|---|---|---|---|---|---|---|---|---|---|---|---|---|
| | | B/A | C/A | D/A | E/A | Initial | After durability | Initial | After durability | [GPa] | Initial | durability |
| Example 6 | Transfer belt 3 | 0.31 | 0.62 | 0.34 | 0.01 | 0.76 | 0.81 | A | A | 0.20 | C | C |
| Example 7 | Transfer belt 9 | 0.31 | 0.62 | 0.34 | 0.01 | 0.76 | 0.81 | A | A | 0.23 | B | C |
| Example 8 | Transfer belt 10 | 0.31 | 0.62 | 0.34 | 0.06 | 0.76 | 0.81 | A | A | 0.25 | A | B |
| Example 9 | Transfer belt 11 | 0.31 | 0.62 | 0.34 | 0.13 | 0.76 | 0.81 | A | A | 0.27 | A | A |
| Example 10 | Transfer belt 12 | 0.31 | 0.62 | 0.34 | 0.16 | 0.76 | 0.81 | A | A | 0.30 | A | A |
| Example 11 | Transfer belt 13 | 0.40 | 0.74 | 0.48 | 0.01 | 0.78 | 0.83 | A | A | 0.27 | A | B |

Evaluation Results

The evaluation results for the Examples and Comparative Examples are described below.

In all of Examples 6 to 11, environmental fluctuations in surface resistance were small before and after durability, and the results of patch void evaluation were also good.

Furthermore, when an evaluation of exposure blur was conducted, it was found that a higher surface hardness was obtained by increasing the amount of initiator and changing the (meth)acrylic moiety contained in the polymer having an organosiloxane polymer moiety. Furthermore, the evaluation results for exposure blur were good.

Various embodiments have been described in detail above but it will be understood that the present disclosure is not limited to these embodiments and encompasses all modifications, variants, alternatives and equivalents falling within the scope of the appended claims.

## Claims

1. An electrophotographic member composing:

    a base layer; and
    a surface layer on the base layer, wherein
    the surface layer comprises a binder resin and electronically conductive particles,
    the binder resin comprises a polymer having an organosiloxane polymer moiety,
    the organosiloxane polymer moiety has a silsesquioxane structure, and
    an infrared absorption spectrum obtained by measuring a surface of the surface layer using infrared spectroscopy satisfies formulas (1) and (2):

    $$(1) \quad 0.20 \leq (B/A) \leq 0.60$$

    $$(2) \quad 0.50 \leq (C/A) \leq 0.92$$

    A represents a maximum value of absorbance in an absorption band corresponding to Si-O-Si bonds observed within a wavenumber range of 1000 to 1025 $cm^{-1}$, B represents a maximum value of absorbance in an absorption band corresponding to Si-OH bonds observed within a wavenumber range of 3200 to 3500 $cm^{-1}$, and C represents a maximum value of absorbance in an absorption band corresponding to $Si\text{-}CH_3$ bonds observed within a wavenumber range of 1225 to 1300 $cm^{-1}$.

2. The electrophotographic member according to claim 1, wherein the organosiloxane polymer moiety has a structure represented by formula (A) and a structure represented by formula (B):

    $$-\{R-Si(OH)_m(O_{1/2})_n\}- \qquad (A)$$

    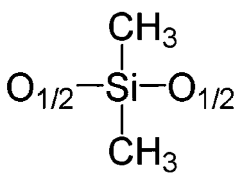 (B)

    R represents a single bond or a divalent linking group, m is an integer of 0 to 2, n is an integer of 1 to 3, and m and n satisfy a relationship m + n = 3.

3. The electrophotographic member according to claim 1 or 2, wherein the polymer having the organosiloxane polymer moiety further has a (meth)acrylic moiety.

4. The electrophotographic member according to claim 3, wherein the (meth)acrylic moiety has at least one unit selected from the group consisting of a dipentaerythritol acrylate unit and a tripentaerythritol acrylate unit.

**5.** The electrophotographic member according to claim 4, wherein the (meth)acrylic moiety has a dipentaerythritol acrylate unit.

**6.** The electrophotographic member according to any one of claims 3 to 5, wherein the infrared absorption spectrum obtained by measuring the surface of the surface layer using infrared spectroscopy satisfies formula (3):

$$0.06 \leq (E/A)$$

E represents a maximum value of an absorbance difference from a baseline among the absorbances of an absorption band corresponding to C-O-C bonds observed in a wavenumber range of 1080 to 1135 $cm^{-1}$, the baseline being a straight line connecting a point at wavenumber 1080 $cm^{-1}$ and a point at wavenumber 1135 $cm^{-1}$ on the infrared absorption spectrum.

**7.** The electrophotographic member according to any one of claims 1 to 6, wherein a hardness of the surface layer of the electrophotographic member is 0.25 GPa or greater.

**8.** The electrophotographic member according to any one of claims 1 to 7, wherein the electronically conductive particles comprise at least one selected from the group consisting of antimony-containing tin oxide particles and antimony-containing zinc oxide particles.

**9.** The electrophotographic member according to any one of claims 1 to 8, wherein the electrophotographic member is an intermediate transfer belt having an endless belt shape.

**10.** An electrophotographic image forming apparatus comprising the electrophotographic member according to any one of claims 1 to 9 as an intermediate transfer member.

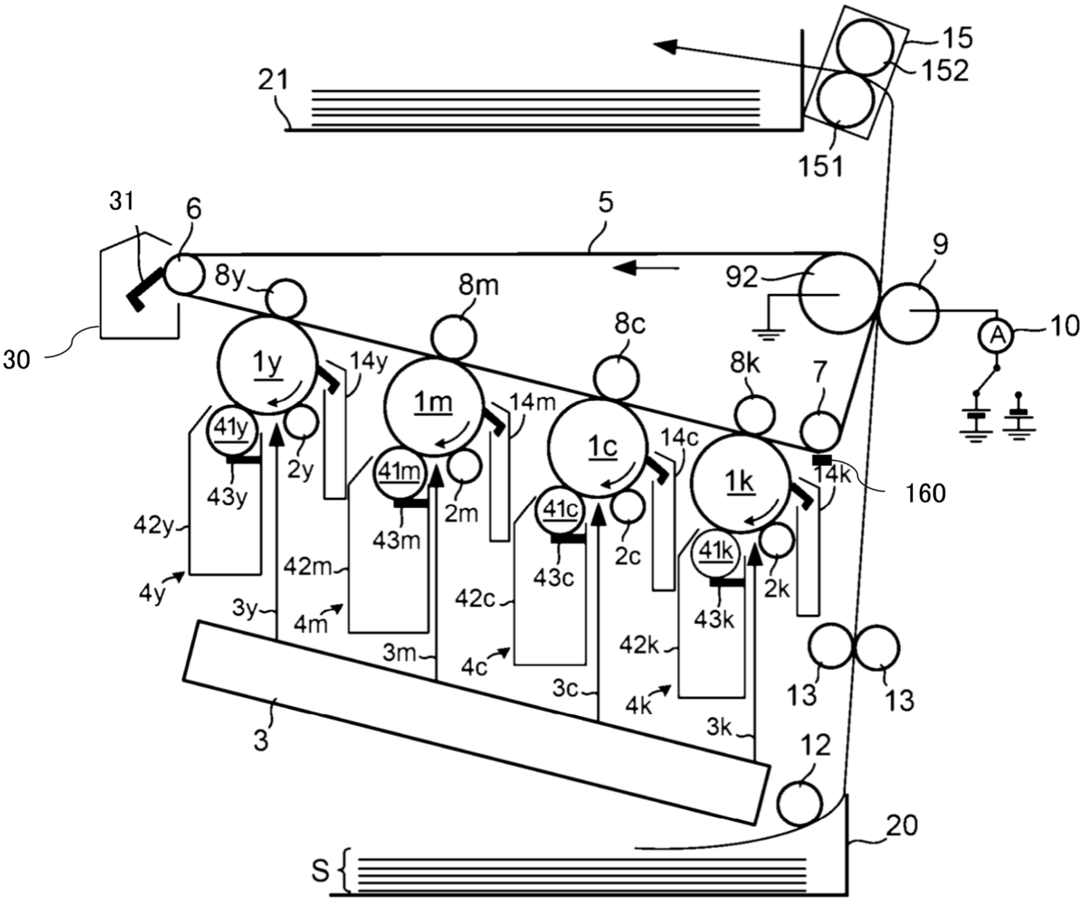
15
152
21
151
31
6
5
8y
92
9
8m
10
A
30
1y
8c
14y
1m
8k
14m
7
41y
1c
2y
14c
43y
41m
14k
160
1k
2m
42y
43m
41c
2c
41k
42m
43c
4y
2k
3y
42c
43k
4m
3m
4c
42k
13
3c
13
4k
3k
3
12
20
S

FIG. 1

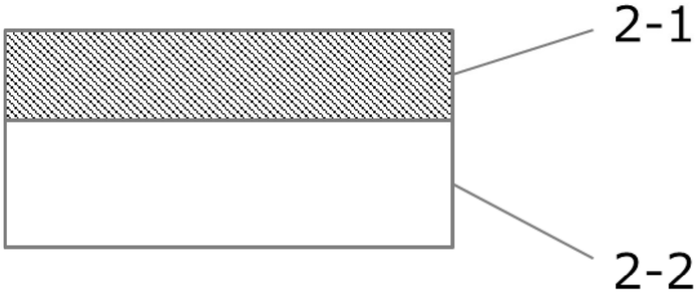
2-1
2-2

FIG. 2

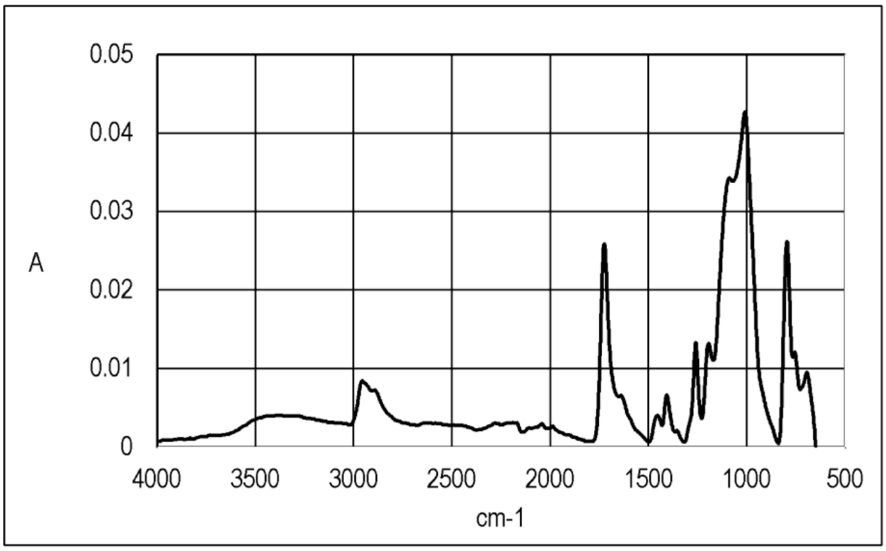
0.05
0.04
0.03
0.02
0.01
0
A
4000
3500
3000
2500
2000
1500
1000
500
cm-1

FIG. 3

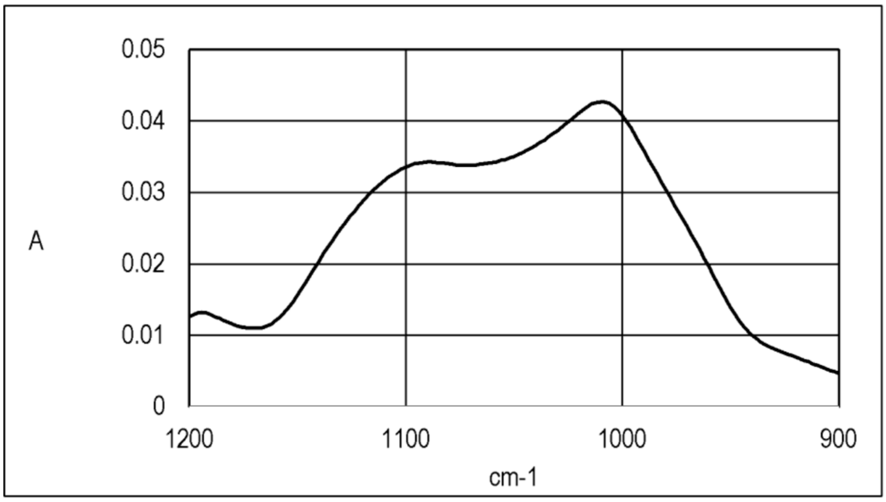
0.05
0.04
0.03
0.02
0.01
0
A
1200
1100
1000
900
cm-1

FIG. 4

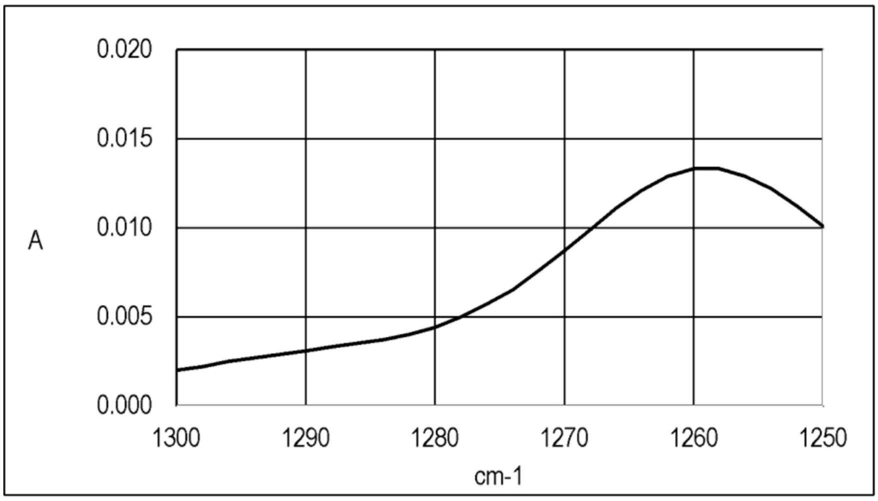
0.020
0.015
0.010
0.005
0.000
A
1300
1290
1280
1270
1260
1250
cm-1

FIG. 5

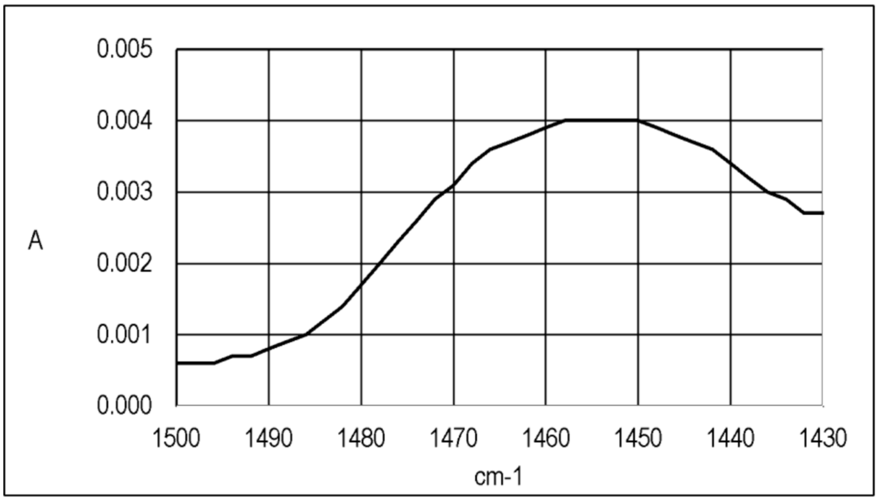
0.005
0.004
0.003
0.002
0.001
0.000
A
1500
1490
1480
1470
1460
1450
1440
1430
cm-1

FIG. 6

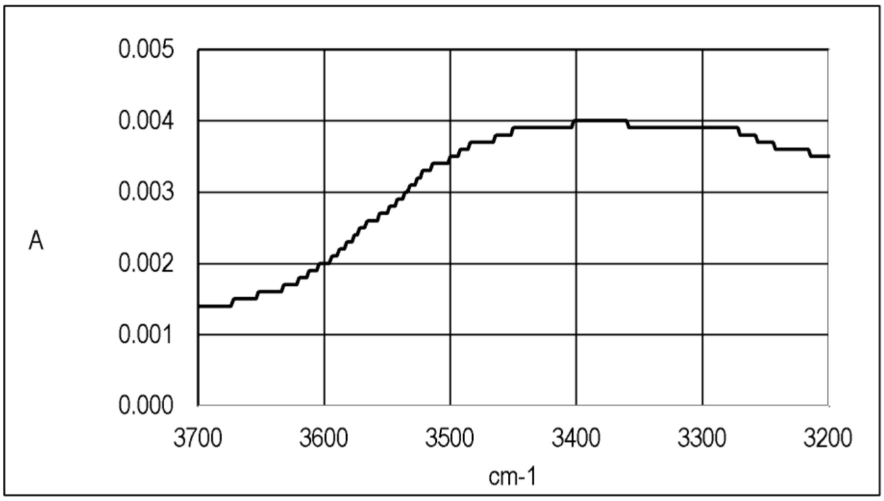
0.005
0.004
0.003
A
0.002
0.001
0.000
3700
3600
3500
3400
3300
3200
cm-1

FIG. 7

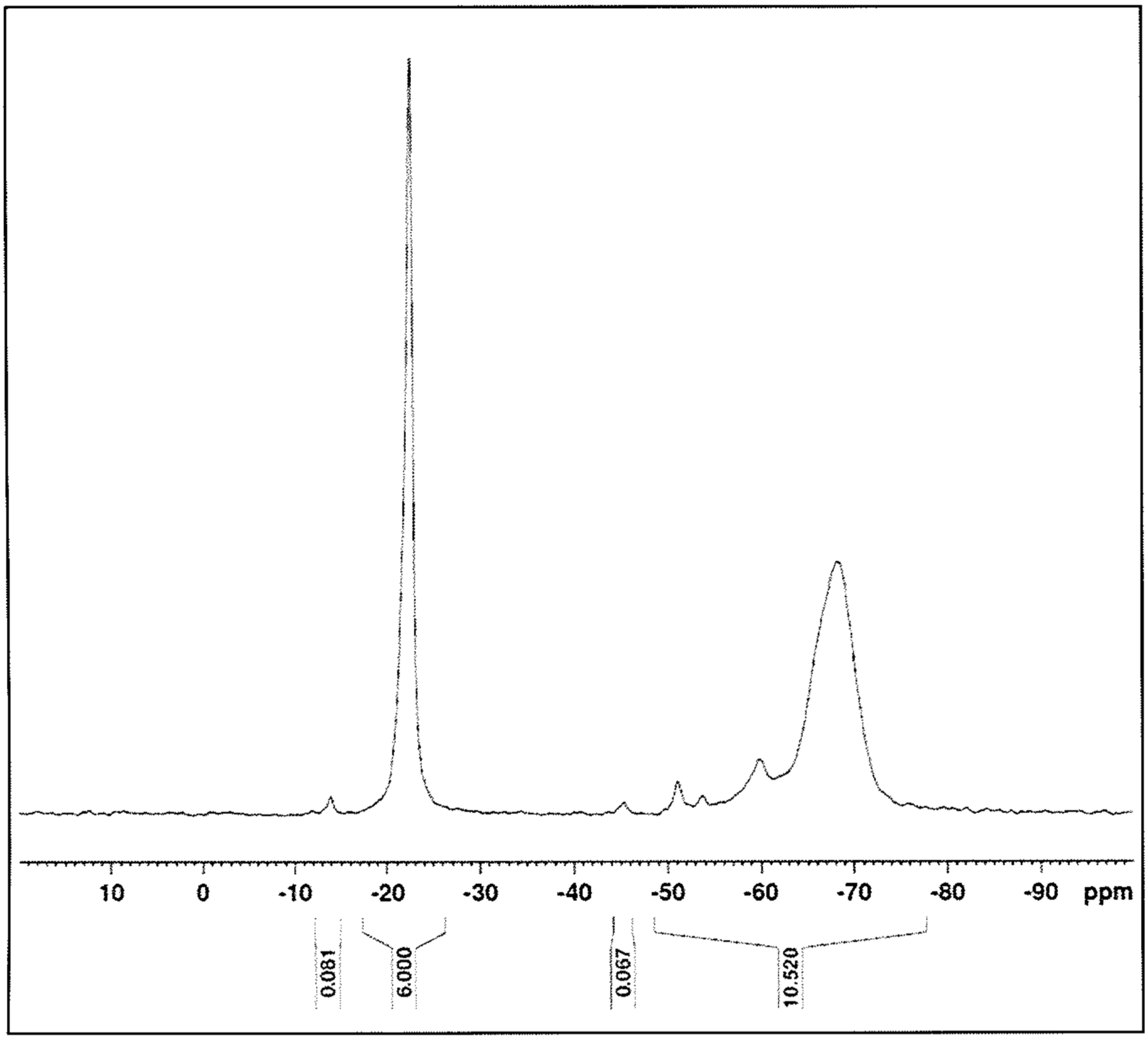
10
0
-10
-20
-30
-40
-50
-60
-70
-80
-90
ppm
0.081
6.000
0.067
10.520

FIG. 8

FIG. 9A pentaerythritol tetraacrylate monomer

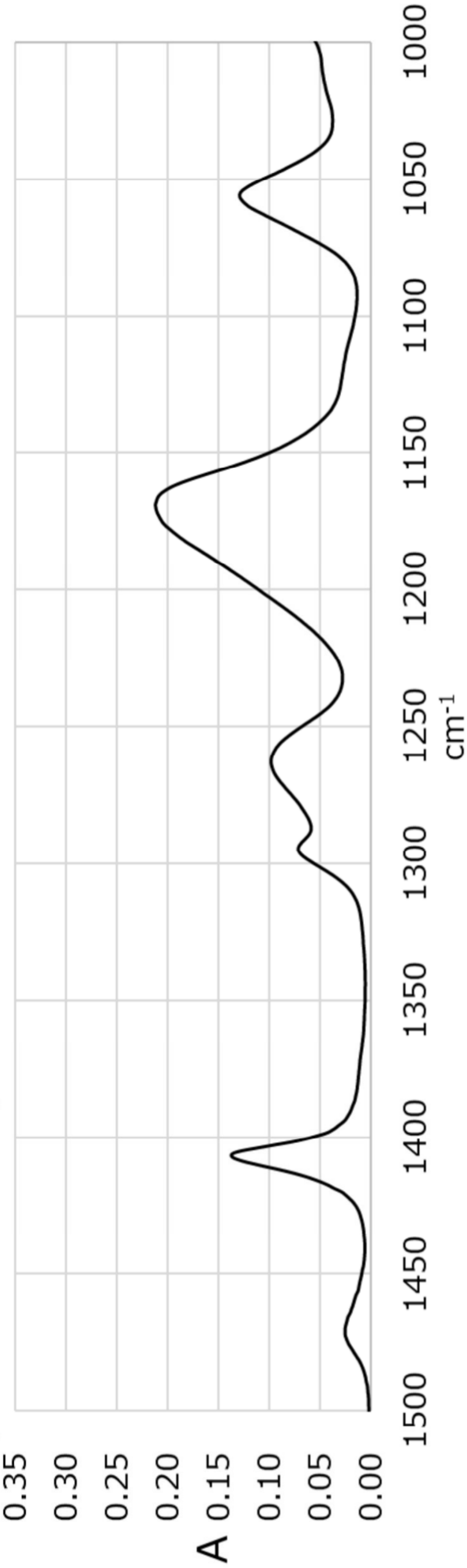


FIG. 9B dipentaerythritol hexaacrylate monomer

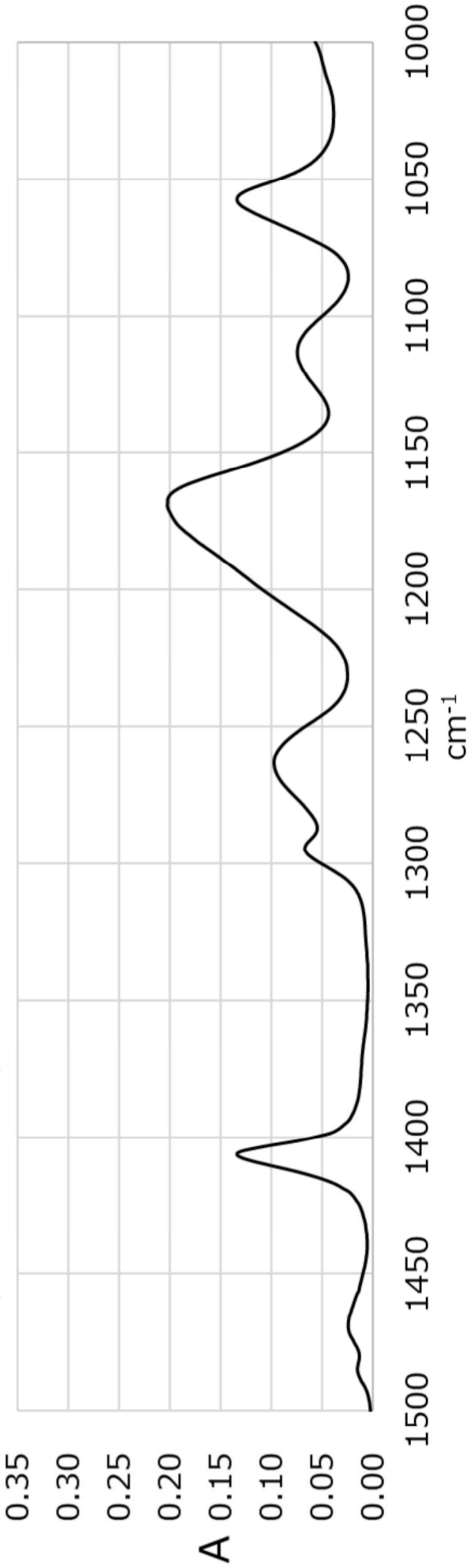

Europäisches Patentamt
European Patent Office
Office européen des brevets

# EUROPEAN SEARCH REPORT

Application Number
EP 26 15 3409

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | JP 2017 049530 A (KONICA MINOLTA INC) 9 March 2017 (2017-03-09)<br>* paragraphs [0006] - [0192]; figures 1-2 * | 1-3,6,9, 10<br>4,5,7,8 | INV.<br>G03G15/01<br>G03G15/16 |
| X | JP H11 202527 A (CANON KK) 30 July 1999 (1999-07-30)<br>* paragraphs [0011] - [0139]; figures 1-8 * | 1-3,6 | |
| Y | JP 2024 031151 A (CANON KK) 7 March 2024 (2024-03-07)<br>* paragraphs [0021] - [0023], [0046] * | 4,5,7 | |
| Y | JP 2017 097279 A (CANON KK) 1 June 2017 (2017-06-01)<br>* paragraphs [0011], [0022], [0039] * | 4,5,7 | |
| Y | US 2022/221806 A1 (KUBO HIDETAKA [JP]) 14 July 2022 (2022-07-14)<br>* paragraphs [0005], [0058] - [0061] * | 8 | TECHNICAL FIELDS SEARCHED (IPC) |
| Y | US 2024/288800 A1 (KITANO YUJI [JP] ET AL) 29 August 2024 (2024-08-29)<br>* paragraphs [0004], [0139] - [0162], [0187] - [0189] * | 8 | G03G |

The present search report has been drawn up for all claims

| Place of search | Date of completion of the search | Examiner |
|---|---|---|
| Munich | 10 June 2026 | Sturdza, Bernd |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

2

EPO FORM 1503 03.82 (P04C01)

## ANNEX TO THE EUROPEAN SEARCH REPORT ON EUROPEAN PATENT APPLICATION NO.

EP 26 15 3409

This annex lists the patent family members relating to the patent documents cited in the above-mentioned European search report. The members are as contained in the European Patent Office EDP file on
The European Patent Office is in no way liable for these particulars which are merely given for the purpose of information.

10-06-2026

| Patent document cited in search report | Publication date | Patent family member(s) | Publication date |
|---|---|---|---|
| JP 2017049530 A | 09-03-2017 | JP 6555025 B2 | 07-08-2019 |
| | | JP 2017049530 A | 09-03-2017 |
| JP H11202527 A | 30-07-1999 | NONE | |
| JP 2024031151 A | 07-03-2024 | NONE | |
| JP 2017097279 A | 01-06-2017 | JP 6635768 B2 | 29-01-2020 |
| | | JP 2017097279 A | 01-06-2017 |
| US 2022221806 A1 | 14-07-2022 | NONE | |
| US 2024288800 A1 | 29-08-2024 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010191088 A
- JP 2007183401 A
- JP 2004118076 A